(19) **Europäisches Patentamt / European Patent Office / Office européen des brevets**

(11) **EP 4 668 893 A1**

(12) **EUROPEAN PATENT APPLICATION**
published in accordance with Art. 153(4) EPC

(43) Date of publication:
**24.12.2025 Bulletin 2025/52**

(21) Application number: **24757318.1**

(22) Date of filing: **16.02.2024**

(51) International Patent Classification (IPC):
*H04W 52/02* (2009.01)     *H04W 76/28* (2018.01)
*H04W 72/232* (2023.01)     *H04W 72/21* (2023.01)

(52) Cooperative Patent Classification (CPC):
**H04W 52/02; H04W 72/21; H04W 72/232;
H04W 76/28;** Y02D 30/70

(86) International application number:
**PCT/KR2024/095310**

(87) International publication number:
**WO 2024/172601 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.02.2023 KR 20230021032**

(71) Applicant: **LG Electronics Inc.**
**Yeongdeungpo-gu**
**Seoul 07336 (KR)**

(72) Inventors:
• **LEE, Sunghoon**
  **Seoul 06772 (KR)**
• **LEE, Youngdae**
  **Seoul 06772 (KR)**
• **KIM, Jaehyung**
  **Seoul 06772 (KR)**
• **YANG, Suckchel**
  **Seoul 06772 (KR)**
• **CHOI, Seunghwan**
  **Seoul 06772 (KR)**
• **HWANG, Seunggye**
  **Seoul 06772 (KR)**

(74) Representative: **Plasseraud IP**
**104 Rue de Richelieu**
**CS92104**
**75080 Paris Cedex 02 (FR)**

(54) **METHOD AND APPARATUS FOR TRANSMITTING AND RECEIVING WIRELESS SIGNALS IN WIRELESS COMMUNICATION SYSTEM**

(57) A method by which a terminal receives a signal in a wireless communication system, according to an embodiment of the present disclosure, comprises: receiving a discontinuous reception (DRX) configuration in a first mode in which a first type signal and a second type signal are both supported; detecting a wake-up signal (WUS) provided as the second type signal in a second mode in which only the second type signal is supported; switching, on the basis of detecting the WUS, from the second mode to the first mode for monitoring of a physical downlink control channel (PDCCH) provided as the first type signal; and monitoring the PDCCH on the basis of the DRX configuration in the first mode, wherein a time resource related to the DRX configuration may be determined on the basis of the time when the WUS is detected in the second mode.

**FIG. 15**

## Description

### TECHNICAL FIELD

The present disclosure relates to a wireless communication system, and more particularly, to a method and apparatus for transmitting and receiving a wireless signal.

### BACKGROUND

Generally, a wireless communication system is developing to diversely cover a wide range to provide such a communication service as an audio communication service, a data communication service, and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

### DISCLOSURE

### TECHNICAL PROBLEM

An object of the present disclosure is to provide a method and apparatus for transmitting or receiving a signal more accurately and efficiently in a wireless communication system.

Other technical objects may be derived from embodiments disclosed in the detailed description.

### TECHNICAL SOLUTION

In an aspect of the present disclosure, provided herein is a method of receiving a signal by a user equipment (UE) in a wireless communication system. The method includes: receiving a discontinuous reception (DRX) configuration in a first mode that supports both a first type of signal and a second type of signal; detecting a wake-up signal (WUS) provided as the second type of signal in a second mode that supports only the second type of signal; based on the detection of the WUS, transitioning from the second mode to the first mode to monitor a physical downlink control channel (PDCCH) provided as the first type of signal; and monitoring the PDCCH in the first mode based on the DRX configuration. A time resource related to the DRX configuration may be determined based on a detection time point of the WUS in the second mode.

A start time point of at least one DRX active time related to the DRX configuration may be determined based on the detection time point of the WUS in the second mode.

The UE may monitor the PDCCH during N DRX active times that start based on the detection time point of the WUS.

The UE may return to the second mode after monitoring the PDCCH during the N DRX active times.

How frequently the monitoring of the PDCCH is performed, may be determined based on the WUS.

Whether to perform at least one of channel state information (CSI) reporting and sounding reference signal (SRS) transmission during at least one DRX active time related to the DRX configuration may be determined based on the WUS.

An acknowledgement (ACK) for the WUS may be transmitted in the first mode.

The first type of signal may be a signal based on orthogonal frequency division multiplexing (OFDM), and the second type of signal may be a signal based on non-OFDM.

In another aspect of the present disclosure, provided herein is a computer-readable recording medium having recorded thereon a program for performing the aforementioned method.

In another aspect of the present disclosure, provided herein is a device for wireless communication. The device includes: a memory configured to store instructions; and a processor configured to perform operations by executing the instructions. The operations of the processor include: receiving a DRX configuration in a first mode that supports both a first type of signal and a second type of signal; detecting a WUS provided as the second type of signal in a second mode that supports only the second type of signal; based on the detection of the WUS, transitioning from the second mode to the first mode to monitor a PDCCH provided as the first type of signal; and monitoring the PDCCH in the first mode based on the DRX configuration. A time resource related to the DRX configuration may be determined based on a detection time point of the WUS in the second mode.

The device may further include: a main radio (MR) receiver configured to receive the first type of signal; and a low-power wake-up radio (LP-WUR) receiver configured to receive the second type of signal.

The device may be a UE operating in a wireless communication system or a processing device configured to control the UE.

In another aspect of the present disclosure, provided herein is a method of transmitting a signal by a base station (BS) in a wireless communication system. The method includes: transmitting a DRX configuration to a UE operating in a first mode that supports both a first type of signal and a second type of signal; based on that the UE operates in a second mode that supports only the second type of signal, transmitting a WUS provided as the second type of signal; and based on the transmission of the WUS, transmitting a PDCCH provided as the first type of signal to the UE that transitions from the second mode to the first mode, according to the DRX configuration. A time resource related to the DRX configuration may be determined based on a transmission time point of the WUS in the second mode.

In a further aspect of the present disclosure, provided herein is a BS for wireless communication. The BS includes: a memory configured to store instructions; and a processor configured to perform operations by executing the instructions. The operations of the processor include: transmitting a DRX configuration to a UE operating in a first mode that supports both a first type of signal and a second type of signal; based on that the UE operates in a second mode that supports only the second type of signal, transmitting a WUS provided as the second type of signal; and based on the transmission of the WUS, transmitting a PDCCH provided as the first type of signal to the UE that transitions from the second mode to the first mode, according to the DRX configuration. A time resource related to the DRX configuration may be determined based on a transmission time point of the WUS in the second mode.

ADVANTAGEOUS EFFECTS

According to an embodiment, a signal may be transmitted/received more accurately and more efficiently in a wireless communication system.

Other technical effects may be derived from embodiments disclosed in the detailed description.

## BRIEF DESCRIPTION OF THE DRAWINGS

FIG. 1 illustrates physical channels used in a 3rd generation partnership project (3GPP) system as an exemplary wireless communication system, and a general signal transmission method using the same.

FIG. 2 illustrates a radio frame structure.

FIG. 3 illustrates a resource grid of a slot.

FIG. 4 illustrates exemplary mapping of physical channels in a slot.

FIG. 5 illustrates an exemplary physical downlink control channel (PDCCH) transmission and reception process.

FIG. 6 illustrates an exemplary physical downlink shared channel (PDSCH) reception and acknowledgement/negative acknowledgement (ACK/NACK) transmission process.

FIG. 7 illustrates an exemplary physical uplink shared channel (PUSCH) transmission process.

FIGS. 8 to 10 are diagrams illustrating a discontinuous reception (DRX) related operation.

FIG. 11 is a diagram illustrating a wake-up signal (WUS).

FIG. 12 is a diagram for explaining DRX operations of a user equipment (UE) based on a WUS defined in Rel-16 standards.

FIG. 13 is a diagram for explaining an operation of dynamically triggering DRX based on reception of a low-power wake-up signal (LP-WUS)

FIG. 14 illustrates an example of main radio (MR) state transition based on reception of an LP-WUS

FIG. 15 is a diagram for explaining a signal reception method for a user equipment (UE) according to an embodiment.

FIG. 16 is a diagram for explaining a signal transmission method for a base station (BS) according to an embodiment.

FIGS. 17 to 20 illustrate an example of a communication system 1 and wireless devices applicable to the present disclosure.

## DETAILED DESCRIPTION

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA may be implemented as a radio technology such as Universal Terrestrial Radio Access (UTRA) or CDMA2000. TDMA may be implemented as a radio technology such as Global System for Mobile communications (GSM)/General Packet Radio Service (GPRS)/Enhanced Data Rates for GSM Evolution (EDGE). OFDMA may be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In an embodiment of the present disclosure, for simplicity, this technology will be referred to as NR (New Radio or New RAT).

The term "base station" used in this specification may be replaced with terms such as a fixed station, Node B, gNode B (gNB), access point (AP), cell, or transmission and reception point (TRP). The term "relay" may be replaced with terms such as a relay node (RN) or relay station. In addition, the term "terminal" may be replaced with terms such as a user equipment (UE), mobile station (MS), mobile subscriber station (MSS), or subscriber station (SS).

For the sake of clarity, 3GPP NR is mainly described, but the technical idea of the present disclosure is not limited thereto.

For the background art relevant to the present disclosure, the definitions of terms, and abbreviations, the following documents may be incorporated by reference.

3GPP LTE

- 38.211: Physical channels and modulation
- 38.212: Multiplexing and channel coding
- 38.213: Physical layer procedures for control
- 38.214: Physical layer procedures for data
- 38.215: Physical layer measurements
- 38.300: NR and NG-RAN Overall Description
- 38.304: User Equipment (UE) procedures in idle mode and in RRC Inactive state
- 38.321Medium Access Control (MAC) protocol specification
- 38.331: Radio Resource Control (RRC) protocol specification
- 37.213: Introduction of channel access procedures to unlicensed spectrum for NR-based access
- 36.355: LTE Positioning Protocol
- 37.355: LTE Positioning Protocol

Terms and Abbreviations

- 5GC: 5G Core Network
- 5GS: 5G System
- AP: Access Point
- CID: Cell ID
- E-CID: Enhanced Cell ID
- PRS: Positioning Reference Signal
- RRM: Radio Resource Management
- TP: Transmission Point
- TRP: Transmission and Reception Point
- UE: User Equipment
- SSB: Synchronization Signal Block
- SFN: System Frame Number
- SS: Search Space
- CSS: Common Search Space
- USS: UE-specific Search Space

- PDCCH: Physical Downlink Control Channel
- PDSCH: Physical Downlink Shared Channel;
- PUCCH: Physical Uplink Control Channel;
- PUSCH: Physical Uplink Shared Channel;
- DCI: Downlink Control Information
- UCI: Uplink Control Information
- SI: System Information
- SIB: System Information Block
- MIB: Master Information Block
- RRC: Radio Resource Control
- DRX: Discontinuous Reception
- RNTI: Radio Network Temporary Identifier
- CSI: Channel state information
- PCell: Primary Cell
- SCell: Secondary Cell
- PSCell: Primary SCG (Secondary Cell Group) Cell
- CA: Carrier Aggregation
- WUS: Wake up Signal
- PO: Paging Occasion
- PEI: Paging Early Indication
- PEI-O: PEI Occasion
- NES: Network Energy Saving
- RO: RACH Occasion
- RAR: Random Access Response
- SDT: Small Data Transmission
- LP-WUS: Low Power Wake-Up Signal
- XR : Abbreviation for eXtended Reality. VR(virtual reality), AR(augmented reality), MR(mixed reality)

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

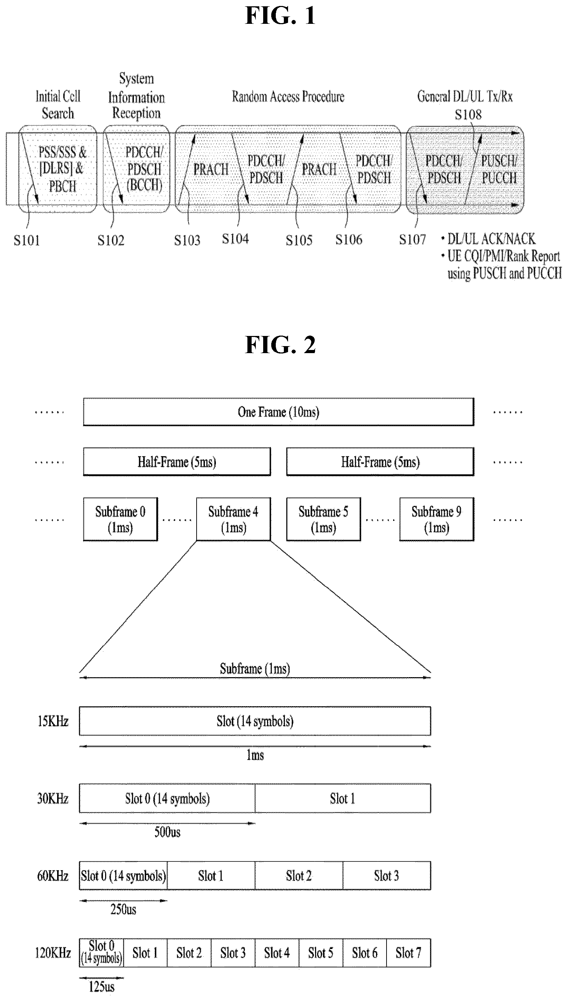

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames.

Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| * $N^{slot}_{symb}$: Number of symbols in a $_{slot}$<br>* $N^{frame,u}_{slot}$: Number of slots in a frame<br>* $N^{subframe,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

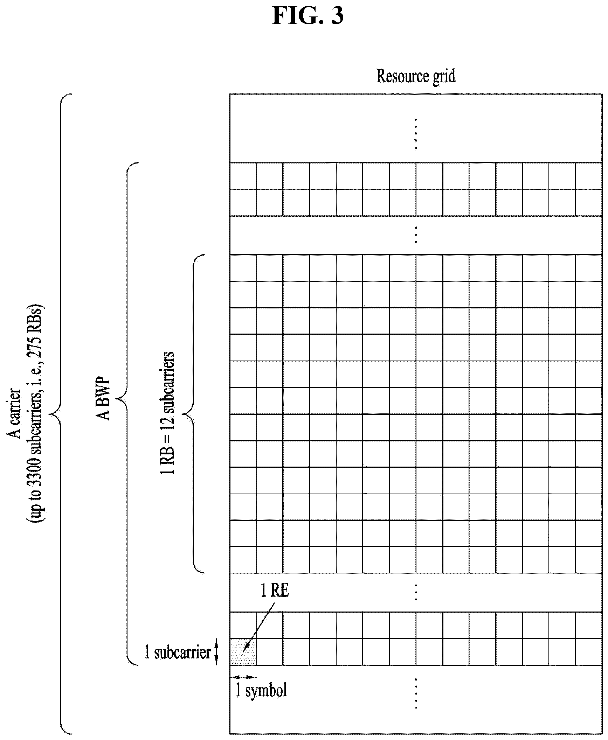

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

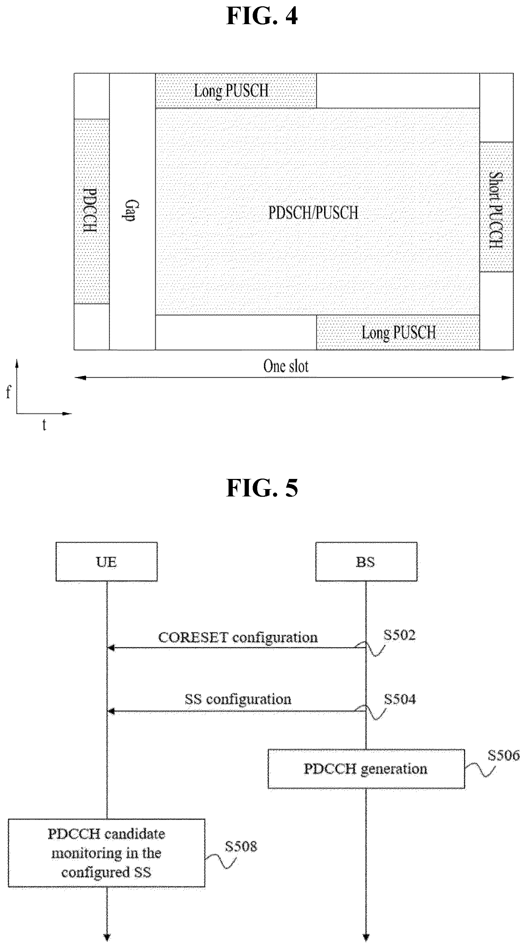

FIG. 4 illustrates an example of mapping physical channels in a slot. In an NR system, a frame is characterized by a self-contained structure in which all of a DL control channel, DL or UL data, and a UL channel may be included in one slot. For example, the first N symbols of a slot may be used to carry a DL channel (e.g., PDCCH) (hereinafter, referred to as a DL control region), and the last M symbols of the slot may be used to carry a UL channel (e.g., PUCCH) (hereinafter, referred to as a UL control region). Each of N and M is an integer equal to or larger than 0. A resource area (hereinafter, referred to as a data region) between the DL control region and the UL control region may be used to transmit DL data (e.g., PDSCH) or UL data (e.g., PUSCH). A guard period (GP) provides a time gap for switching from a transmission mode to a reception mode or from the reception mode to the transmission mode. Some symbols at a DL-to-UL switching time in a subframe may be configured as a GP.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g., a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

FIG. 5 illustrates an exemplary PDCCH transmission/reception process.

Referring to FIG. 5, a BS may transmit a control resource set (CORESET) configuration to a UE (S502). A CORESET is defined as a resource element group (REG) set having a given numerology (e.g., a subcarrier spacing (SCS), a cyclic prefix (CP) length, and so on). An REG is defined as one OFDM symbol by one (physical) resource block (P)RB. A plurality of CORESETs for one UE may overlap with each other in the time/frequency domain. A CORESET may be configured by system information (e.g., a master information block (MIB)) or higher-layer signaling (e.g., radio resource control (RRC) signaling). For example, configuration information about a specific common CORESET (e.g., CORESET #0) may be transmitted in the MIB. For example, a PDSCH carrying system information block 1 (SIB1) may be scheduled by a specific PDCCH, and CORESET #0 may be used to transmit the specific PDCCH. Further, configuration information about CORESET #N (e.g., N>0) may be transmitted by RRC signaling (e.g., cell-common RRC signaling, UE-specific RRC signaling, or the like). For example, the UE-specific RRC signaling carrying CORESET configuration information may include, but not limited to, various types of signaling such as an RRC setup message, an RRC reconfiguration message, and/or BWP configuration information. Specifically, a CORESET configuration may include the following information/-fields.

- controlResourceSetId: Indicates the ID of a CORESET.
- frequencyDomainResources: Indicates the frequency-domain resources of the CORESET. The resources are indicated by a bitmap in which each bit corresponds to an RB group (= 6 (consecutive) RBs). For example, the most significant bit (MSB) of the bitmap corresponds to a first RB group in a BWP. An RB group corresponding to a bit having a bit value of 1 is allocated as frequency-domain resources of the CORESET.
- duration: Indicates the time-domain resources of the CORESET. It indicates the number of consecutive OFDM symbols included in the CORESET. The duration has a value between 1 and 3.
- cce-REG-MappingType: Indicates a control channel element (CCE)-to-REG mapping type. An interleaved type and a non-interleaved type are supported.
- interleaverSize: Indicates an interleaver size.
- pdcch-DMRS-ScramblingID: Indicates a value used for PDCCH DMRS initialization. When pdcch-DMRS-ScramblingID is not included, the physical cell ID of a serving cell is used.
- precoderGranularity: Indicates a precoder granularity in the frequency domain.
- reg-BundleSize: Indicates an REG bundle size.
- tci-PresentInDCI: Indicates whether a transmission configuration index (TCI) field is included in DL-related DCI.
- tci-StatesPDCCH-ToAddList: Indicates a subset of TCI states configured in pdcch-Config, used for providing quasi-co-location (QCL) relationships between DL RS(s) in an RS set (TCI-State) and PDCCH DMRS ports.

Further, the BS may transmit a PDCCH search space (SS) configuration to the UE (S504). The PDCCH SS configuration may be transmitted by higher-layer signaling (e.g., RRC signaling). For example, the RRC signaling may include, but not limited to, various types of signaling such as an RRC setup message, an RRC reconfiguration message, and/or BWP configuration information. While a CORESET configuration and a PDCCH SS configuration are shown as separately signaled in FIG. 5, for convenience of description, the present disclosure is not limited thereto. For example, the CORESET configuration and the PDCCH SS configuration may be transmitted in one message (e.g., by one RRC signaling) or separately in different messages.

The PDCCH SS configuration may include information about the configuration of a PDCCH SS set. The PDCCH SS set may be defined as a set of PDCCH candidates monitored (e.g., blind-detected) by the UE. One or more SS sets may be configured for the UE. Each SS set may be a UE-specific search space (USS) set or a common search space (CSS) set. For convenience, PDCCH SS set may be referred to as "SS" or "PDCCH SS."

A PDCCH SS set includes PDCCH candidates. A PDCCH candidate is CCE(s) that the UE monitors to receive/detect a PDCCH. The monitoring includes blind decoding (BD) of PDCCH candidates. One PDCCH (candidate) includes 1, 2, 4, 8, or 16 CCEs according to an aggregation level (AL). One CCE includes 6 REGs. Each CORESET configuration is associated with one or more SSs, and each SS is associated with one CORESET configuration. One SS is defined based on one SS configuration, and the SS configuration may include the following information/fields.

- searchSpaceId: Indicates the ID of an SS.

- controlResourceSetId: Indicates a CORESET associated with the SS.
- monitoringSlotPeriodicityAndOffset: Indicates a periodicity (in slots) and offset (in slots) for PDCCH monitoring.
- monitoringSymbolsWithinSlot: Indicates the first OFDM symbol(s) for PDCCH monitoring in a slot configured with PDCCH monitoring. The first OFDM symbol(s) for PDCCH monitoring is indicated by a bitmap with each bit corresponding to an OFDM symbol in the slot. The MSB of the bitmap corresponds to the first OFDM symbol of the slot. OFDM symbol(s) corresponding to bit(s) set to 1 corresponds to the first symbol(s) of a CORESET in the slot.
- nrofCandidates: Indicates the number of PDCCH candidates (one of values 0, 1, 2, 3, 4, 5, 6, and 8) for each AL where AL={1, 2, 4, 8, 16}.
- searchSpaceType: Indicates CSS or USS as well as a DCI format used in the corresponding SS type.

Subsequently, the BS may generate a PDCCH and transmit the PDCCH to the UE (S506), and the UE may monitor PDCCH candidates in one or more SSs to receive/detect the PDCCH (S508). An occasion (e.g., time/frequency resources) in which the UE is to monitor PDCCH candidates is defined as a PDCCH (monitoring) occasion. One or more PDCCH (monitoring) occasions may be configured in a slot.

Table 3 shows the characteristics of each SS.

[Table 3]

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| | UE Specific | C-RNTI, or MCS-C-RNTI, or CS-RNTI(s) | User specific PDSCH decoding |

Table 4 shows DCI formats transmitted on the PDCCH.

[Table 4]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

A CCE-to-REG mapping type is configured as one of an interleaved CCE-to-REG type and a non-interleaved CCE-to-REG type.

- Non-interleaved CCE-to-REG mapping (or localized CCE-to-REG mapping) (FIG. 5): 6 REGs for a given CCE are grouped into one REG bundle, and all of the REGs for the given CCE are contiguous. One REG bundle corresponds to one CCE.
- Interleaved CCE-to-REG mapping (or distributed CCE-to-REG mapping): 2, 3 or 6 REGs for a given CCE are grouped into one REG bundle, and the REG bundle is interleaved within a CORESET. In a CORESET including one or two OFDM symbols, an REG bundle includes 2 or 6 REGs, and in a CORESET including three OFDM symbols, an REG bundle includes 3 or 6 REGs. An REG bundle size is set on a CORESET basis.

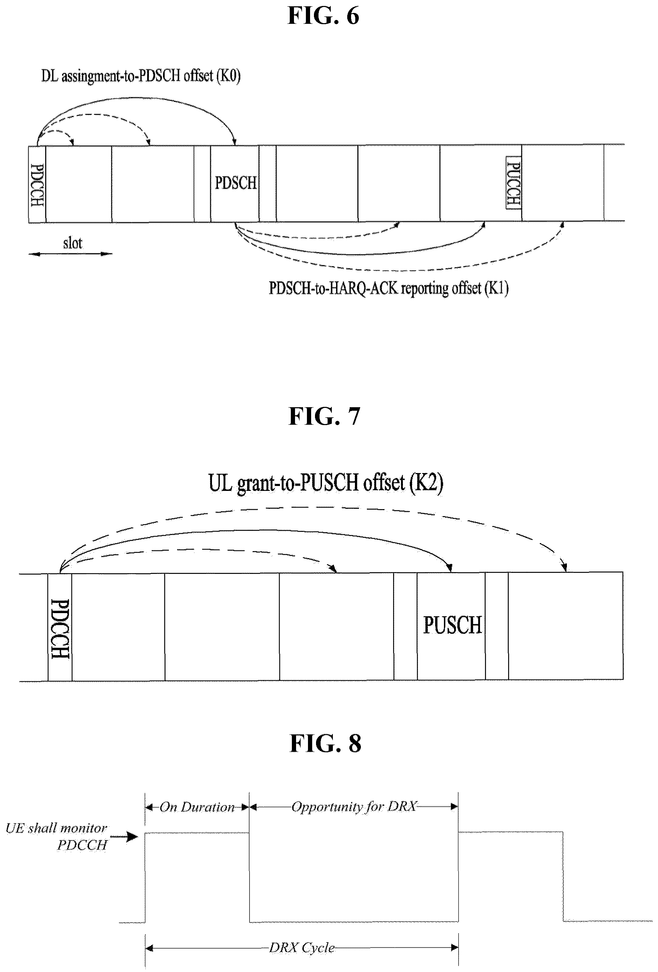

FIG. 6 illustrates an exemplary PDSCH reception and ACK/NACK transmission process. Referring to FIG. 6, the UE may detect a PDCCH in slot #n. The PDCCH includes DL scheduling information (e.g., DCI format 1_0 or DCI format 1_1) and indicates a DL assignment-to-PDSCH offset, K0 and a PDSCH-HARQ-ACK reporting offset, K1. For example, DCI format 1_0 or DCI format 1_1 may include the following information.

- Frequency domain resource assignment: Indicates an RB set allocated to a PDSCH.
- Time domain resource assignment: Indicates K0 (e.g., slot offset), the starting position (e.g., OFDM symbol index) of the PDSCH in slot #n+K0, and the duration (e.g., the number of OFDM symbols) of the PDSCH.
- PDSCH-to-HARQ_feedback timing indicator: Indicates K1.
- HARQ process number (4 bits): Indicates the HARQ process ID of data (e.g., a PDSCH or TB).
- PUCCH resource indicator (PRI): Indicates a PUCCH resource to be used for UCI transmission among a plurality of PUCCH resources in a PUCCH resource set.

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the present disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in 2 bits if spatial bundling is not configured and in 1 bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter maxNrofCodeWordsScheduledByDCI indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bit-wise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

FIG. 7 illustrates an exemplary PUSCH transmission procedure. Referring to FIG. 7, the UE may detect a PDCCH in slot #n. The PDCCH includes DL scheduling information (e.g., DCI format 1_0 or 1_1). DCI format 1_0 or 1_1 may include the following information.

- Frequency domain resource assignment: Indicates an RB set assigned to the PUSCH.
- Time domain resource assignment: Indicates a slot offset K2 and the starting position (e.g., OFDM symbol index) and duration (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

## Paging

The network may (i) access to UEs in RRC_IDLE, RRC_INACTIVE, and RRC_CONNECTED states by paging messages, and (ii) indicate a system information change and an earthquake and tsunami warning system/commercial mobile alert system (ETWS/CMAS) notification to UEs in the RRC_IDLE and RRC_INACTIVE states and UEs in the RRC_CONNECTED state by short messages. Both a paging message and a short message are transmitted based on a P-RNTI-based PDCCH. The paging message is transmitted on a logical channel, paging control channel (PCCH), whereas the short message is directly transmitted on a physical channel, PDCCH. Because the logical channel, PCCH is mapped to a physical channel, PDSCH, the paging message may be understood as scheduled based on a P-RNTI-based PDCCH.

While the UE stays in the RRC_IDLE state, the UE monitors a paging channel for core network (CN)-initiated paging. In the RRC_INACTIVE state, the UE also monitors the paging channel, for radio access network (RAN)-initiated paging. The UE does not need to monitor the paging channel continuously. Paging discontinuous reception (DRX) is defined as monitoring a paging channel only during one paging occasion (PO) per DRX cycle by a UE in the RRC_IDLE or RRC_INACTIVE state. A paging DRX cycle is configured by the network, as follows.

1) In the case of CN-initiated paging, a default cycle is broadcast in system information.
2) In the case of CN-initiated paging, a UE-specific cycle is configured by NAS signaling.
3) In the case of RAN-initiated signaling, a UE-specific cycle is configured by RRC signaling.

Because all of POs of the UE for CN-initiated signaling and RAN-initiated signaling are based on the same UE ID, the two POs overlap with each other. The number of POs in a DRX cycle may be set by system information, and the network may distribute UEs to the POs based on IDs.

When the UE is in the RRC_CONNECTED state, the UE monitors a paging channel in each paging occasion (PO) signaled by system information, for an SI change indication and a PWS notification. In bandwidth adaptation (BA), the RRC_CONNECTED UE monitors only a paging channel in an active BWP in which a configured CSS is located.

In shared spectrum channel access, additional PDCCH monitoring occasions may be configured in a PO of the UE, for paging monitoring. However, when the UE detects a P-RNTI-based PDCCH transmission in its PO, the UE does not need to monitor subsequent PDCCH monitoring occasions in the PO.

To reduce power consumption, the UE may use DRX in the RRC_IDLE and RRC_INACTIVE states. The UE monitors one PO per DRX cycle. A PO is a set of PDCCH monitoring occasions, and may include multiple time slots (e.g., subframes or OFDM symbols) in which paging DCI may be transmitted. One paging frame (PF) is one radio frame and may include one or more POs or the starting points of one or more POs.

In a multi-beam operation, the UE assumes that the same paging message and the same short message are repeated in all transmission beams. The paging message is the same for both of RAN-initiated paging and CN-initiated paging.

Upon receipt of RAN-initiated paging, the UE initiates an RRC connection resume procedure. Upon receipt of CN-initiated paging in the RRC_INACTIVE state, the UE transitions to the RRC_IDL state and notifies the NAS of the CN-initiated paging.

A PF and a PO for paging are determined in the following manner:

- An SFN for the PF is determined by:

$$(\text{SFN} + \text{PF\_offset}) \bmod T = (T \operatorname{div} N)*(\text{UE\_ID} \bmod N)$$

- An index i_s indicating the index of the PO is determined by:

i_s = floor(UE_ID/N) mod Ns

The following parameters may be used to calculate the PF and i_s above.

- T: The DRX cycle of the UE (T is determined by the smallest of UE-specific DRX values (if configured by RRC and/or an upper layer) and a default DRX value broadcast in system information. In the RRC_IDLE state, if UE-specific DRX is not configured by an upper layer, the default value is applied).
- N: Number of total paging frames in T
- Ns: Number of POs for a PF
- PF_offset: Offset used for PF determination
- UE_ID: 5G-S-TMSI mod 1024

DRX (Discontinuous Reception)

(1) RRC_CONNECTED DRX

FIG. 8 is a diagram illustrating a DRX operation of a UE according to an embodiment of the present disclosure.

The UE may perform a DRX operation in the afore-described/proposed procedures and/or methods. A UE configured with DRX may reduce power consumption by receiving a DL signal discontinuously. DRX may be performed in an RRC_IDLE state, an RRC_INACTIVE state, and an RRC_CONNECTED state. The UE performs DRX to receive a paging signal discontinuously in the RRC_IDLE state and the RRC_INACTIVE state. DRX in the RRC_CONNECTED state (RRC_CONNECTED DRX) will be described below.

Referring to FIG. 8, a DRX cycle includes an On Duration and an Opportunity for DRX. The DRX cycle defines a time interval between periodic repetitions of the On Duration. The On Duration is a time period during which the UE monitors a PDCCH. When the UE is configured with DRX, the UE performs PDCCH monitoring during the On Duration. When the UE successfully detects a PDCCH during the PDCCH monitoring, the UE starts an inactivity timer and is kept awake. On the contrary, when the UE fails in detecting any PDCCH during the PDCCH monitoring, the UE transitions to a sleep state after the On Duration. Accordingly, when DRX is configured, PDCCH monitoring/reception may be performed discontinuously in the time domain in the afore-described/proposed procedures and/or methods. For example, when DRX is configured, PDCCH reception occasions (e.g., slots with PDCCH SSs) may be configured discontinuously according to a DRX configuration in an embodiment of the present disclosure. On the contrary, when DRX is not configured, PDCCH monitoring/reception may be performed continuously in the time domain. For example, when DRX is not configured, PDCCH reception occasions (e.g., slots with PDCCH SSs) may be configured continuously in an embodiment of the present disclosure. Irrespective of whether DRX is configured, PDCCH monitoring may be restricted during a time period configured as a measurement gap.

Table 5 describes a DRX operation of a UE (in the RRC_CONNECTED state). Referring to Table 5, DRX configuration information is received by higher-layer signaling (e.g., RRC signaling), and DRX ON/OFF is controlled by a DRX command from the MAC layer. Once DRX is configured, the UE may perform PDCCH monitoring discontinuously in performing the afore-described/proposed procedures and/or methods.

[Table 5]

|  | Type of signals | UE procedure |
|---|---|---|
| 1st step | RRC signalling (MAC-CellGroupConfig) | - Receive DRX configuration information |
| 2nd Step | MAC CE ((Long) DRX command MAC CE) | - Receive DRX command |
| 3rd Step | - | - Monitor a PDCCH during an on-duration of a DRX cycle |

MAC-CellGroupConfig includes configuration information required to configure MAC parameters for a cell group. MAC-CellGroupConfig may also include DRX configuration information. For example, MAC-CellGroupConfig may include the following information in defining DRX. - Value of drx-OnDurationTimer: defines the duration of the starting period of the DRX cycle.

- Value of drx-InactivityTimer: defines the duration of a time period during which the UE is awake after a PDCCH occasion in which a PDCCH indicating initial UL or DL data has been detected
- Value of drx-HARQ-RTT-TimerDL: defines the duration of a maximum time period until a DL retransmission is received after reception of a DL initial transmission.
- Value of drx-HARQ-RTT-TimerDL: defines the duration of a maximum time period until a grant for a UL retransmission is received after reception of a grant for a UL initial transmission.
- drx-LongCycleStartOffset: defines the duration and starting time of a DRX cycle.
- drx-ShortCycle (optional): defines the duration of a short DRX cycle.

When any of drx-OnDurationTimer, drx-InactivityTimer, drx-HARQ-RTT-TimerDL, and drx-HARQ-RTT-TimerDL is running, the UE performs PDCCH monitoring in each PDCCH occasion, staying in the awake state.

RRC_IDLE DRX

In the RRC_IDLE and RRC_INACTIVE states, DRX is used to receive a paging signal discontinuously. For simplicity, DRX performed in the RRC_IDLE (or RRC_INACTIVE) state will be referred to as RRC_IDLE DRX.

Therefore, if DRX is configured, PDCCH monitoring/reception may be performed discontinuously in the time domain in performing the above-described/proposed procedures and/or methods are performed.

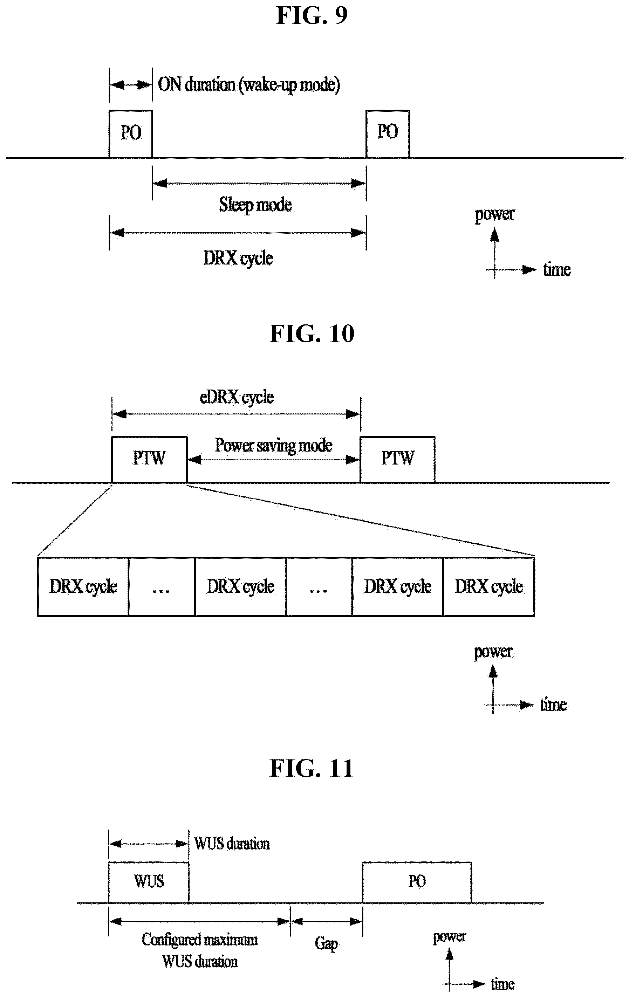

FIG. 9 illustrates an exemplary DRX cycle for paging.

Referring to FIG. 9, DRX may be configured for discontinuous reception of a paging signal. The UE may receive DRX configuration information from the BS by higher-layer (e.g., RRC) signaling. The DRX configuration information may include configuration information related to a DRX cycle, a DRX offset, a DRX timer, and the like. The UE repeats an On duration and a Sleep duration according to the DRX cycle. The UE may operate in a wakeup mode during the On duration and in a sleep mode during the Sleep duration.

In the wakeup mode, the UE may monitor a PO to receive a paging message. A PO means a time resource/interval (e.g., subframe or slot) in which the UE expects to receive a paging message. PO monitoring includes monitoring a PDCCH (MPDCCH or NPDCCH) scrambled with a P-RNTI (hereinafter, referred to as a paging PDCCH) on a PO. The paging message may be included in the paging PDCCH or in a PDSCH scheduled by the paging PDCCH. One or more POs may be included in a paging frame (PF), and the PF may be periodically configured based on a UE ID. A PF may correspond to one radio frame, and the UE ID may be determined based on the International Mobile Subscriber Identity (IMSI) of the UE. When DRX is configured, the UE monitors only one PO per DRX cycle. When the UE receives a paging message indicating a change of its ID and/or system information on a PO, the UE may perform an RACH procedure to initialize (or reconfigure) a connection with the BS, or receive (or obtain) new system information from the BS. Therefore, PO monitoring may be performed discontinuously in the time domain to perform an RACH procedure for connection to the BS or to receive (or obtain) new system information from the BS in the above-described procedures and/or methods.

FIG. 10 illustrates an extended DRX (eDRX) cycle.

According to the DRX cycle configuration, the maximum cycle duration may be limited to 2.56 seconds. However, in the case of a UE that intermittently performs data transmission/reception, such as an MTC UE or an NB-IoT UE, unnecessary power consumption may occur during the DRX cycle. In order to further reduce the power consumption of the UE, a method of significantly extending the DRX cycle based on a power saving mode (PSM) and a paging time window or paging transmission window (PTW) has been introduced. The extended DRX cycle is simply referred to as an eDRX cycle. Specifically, paging hyper-frames (PHs) are periodically configured based on the UE ID, and a PTW is defined in the PHs. The UE may perform a DRX cycle in the PTW duration to switch to the wakeup mode on the PO thereof to monitor the paging signal. One or more DRX cycles (e.g., wake-up mode and sleep mode) of FIG. 9 may be included in the PTW duration. The number of DRX cycles in the PTW duration may be set by the BS through a higher layer (e.g., RRC) signal.

**WUS (Wake-up signal)/PEI (Paging Early Indication)**

**In** LTE Rel-15 Narrowband Internet of Things (NB-IoT) and Machine Type Communication (MTC), a wake-up signal (WUS) was introduced to save power of a UE. The WUS is a signal indicating preliminarily whether there is an actual paging transmission in a paging SS at a specific position. When the BS wants to transmit paging in a PO at a specific position, the BS may transmit a WUS at WUS transmission position(s) associated with the PO. The UE monitors the WUS transmission positions associated with the PO at the specific position. Upon detection of the WUS at the WUS transmission position(s), the UE may expect that paging will be transmitted in the PO, whereas when failing to detect the WUS at the WUS transmission position(s), the UE may not expect paging in the PO. The gain of power saving may be achieved by this operation. In LTE Rel-16 NB-IoT and MTC, a UE-group WUS was introduced to increase the power saving gain of the Rel-15 WUS. The UE-group WUS may advantageously reduce an unnecessary wakeup probability of a UE by using a WUS transmission position and sequence determined based on the UE-group ID of the UE.

FIG. 11 is a diagram illustrating a WUS in an LTE system. Referring to FIG. 11, in MTC and NB-IoT, the WUS may be used to reduce power consumption related to paging monitoring. The WUS is a physical layer signal indicating whether a UE is supposed to monitor a paging signal (e.g., an MPDCCH/NPDCCH scrambled with a P-RNTI) according to a cell configuration. For a UE which is not configured with eDRX (i.e., configured only with DRX), the WUS may be associated with one PO (N=1). On the contrary, for a UE configured with eDRX, the WUS may be associated with one or more POs (N≥1). Upon detection of the WUS, the UE may monitor N POs after being associated with the WUS. When failing to detect the WUS, the UE may maintain sleep mode by skipping PO monitoring until the next WUS monitoring. The UE may receive WUS configuration information from the BS and monitor the WUS based on the WUS configuration information. The WUS configuration information may include, for example, a maximum WUS duration, the number of consecutive POs associated with the WUS, and gap information. The maximum WUS duration may refer to a maximum time period during which the WUS may be transmitted, and may be expressed as a ratio to a maximum repetition number (e.g., Rmax) related to a PDCCH (e.g., MPDCCH or NPDCCH). Although the UE may expect repeated WUS transmissions within the maximum WUS duration, the number of actual WUS transmissions may be less than a maximum number of WUS transmissions within the maximum WUS duration. For example, the number of WUS repetitions may be small for a UE in good coverage. A resource/occasion in which the WUS may be transmitted within the maximum WUS duration is referred to as a WUS resource. The WUS resource may be defined as a plurality of consecutive OFDM symbols by a plurality of consecutive subcarriers. The WUS resource may be defined as a plurality of consecutive OFDM symbols by a plurality of consecutive subcarriers in a subframe or slot. For example, the WUS resource may be defined as 14 consecutive OFDM symbols by 12 consecutive subcarriers. Upon detection of the WUS, the UE does not monitor the WUS until a first PO associated with the WUS. When the WUS is not detected during the maximum WUS duration, the UE does not monitor a paging signal in POs associated with the WUS (or the UE remains in the sleep mode).

In a communication system such as NR, it may be indicated by a paging early indication (PEI) (e.g., a PEI based on a sequence or DCI) whether the UE should monitor paging DCI in a PO or whether paging DCI is provided. When the UE succeeds in detecting the PEI, the UE monitors the paging DCI (and/or a PDSCH carrying a corresponding paging message). When failing in detecting the PEI, the UE may skip monitoring of the paging DCI in the PO.

## LP-WUS reception and behavior of connected mode UE

In the present disclosure, based on the terminology used in the standardization discussions related to low-power wake-up signal (LP-WUS), a main radio is referred to as an MR, and a low-power wake-up receiver (LP-WUR) is referred to as an LR.

The MR refers to a general receiver for signal reception at a NR UE, and the MR may be used to receive NR OFDM signals, etc. In other words, the receiver of the UE in the current NR standard may be understood as the MR.

The LP-WUR refers to a receiver that is newly added to the UE to receive low-power signals, and through the LP-WUR, newly designed low-power signals such as an LP-WUS or lower power synchronization signal (LP-SS) may be received. The LP-WUR may have characteristics of lower cost and lower power consumption compared to the MR.

Low-power signals such as the LP-WUS or LP-SS may be configured/transmitted differently in the time/frequency domain compared to MR signals with an OFDM symbol structure. For example, the LP-WUS may be modulated with on-off keying (OOK) and aligned to the boundary of time resources (e.g., slots or symbols in the time domain), but may be transmitted without alignment to the boundary of frequency resources (e.g., REs or subcarriers in the frequency domain). For example, the LP-WUS may be configured to represent the presence or absence (1/0) of a signal within a specific time duration, and the UE may receive the LP-WUS only through energy detection (or envelope detection) of the LP-WUS within the specific time duration. The OOK symbol of the LP-WUS may be overlaid with i) a sequence for spectrum flattening, ii) an OFDM sequence for increasing transmission coverage, and/or iii) an OFDM sequence for additional information transmission.

In the RRC connected mode, PDCCH monitoring accounts for a significant portion of the power consumption of the UE. Therefore, in Rel-15/16/17, operations to reduce the PDCCH monitoring time and guarantee the sleep time for UE power saving have been introduced. Specifically, the DRX operation, WUS of DRX, and adaptive PDCCH monitoring within the DRX active time have been introduced in Rel-15/16/17. A UE in the RRC connected mode configured with DRX periodically wakes up to perform PDCCH monitoring, and in this case, the DRX active time of one cycle may be skipped through the wake-up indication of DRX. When the DRX active time is skipped, it is necessary to configure how related CSI reporting and/or SRS transmission are performed. In addition, it may be indicated whether PDCCH monitoring is suspended for a certain period or whether the frequency of PDCCH monitoring is to be adjusted within the DRX active time.

As described above, since the UE performs PDCCH monitoring through the MR, the longer the MR sleep time during which PDCCH monitoring is not performed, the more effective the power saving of the UE may be. In other words, the PDCCH monitoring (or CSI reporting and/or SRS transmission) operation of the UE may be performed by the MR, and this may be referred to as the active state of the MR. The active state of the MR of the UE may refer to a state other than the sleep state. In general, reducing the active state time of the MR may be an important factor in reducing the power consumption of the UE.

On the other hand, since the LR of the UE may operate with relatively very low power consumption, the burden of receiving the LP-WUS is low. In other words, the UE may receive the LP-WUS based on the LR in a state with very low or almost no power consumption. If the UE may receive the LP-WUS even in the RRC connected mode, operations such as waking up the MR based on the LP-WUS or, conversely, temporarily switching the MR to the sleep state (e.g., micro-sleep) may be considered to reduce MR power consumption in the RRC connected mode. For example, a method of reducing the frequency of PDCCH monitoring on the MR of the UE based on the LP-WUS/LP-WUR may be considered, and to this end, the LP-WUS may be configured to indicate adjustment of PDCCH monitoring (or CSI reporting and/or SRS transmission) on the MR. In this case, power saving effects may be expected by extending the time during which the UE does not perform PDCCH monitoring (or CSI reporting and/or SRS transmission).

Based on the above discussion, the present disclosure proposes operations in which the UE in the RRC connected mode receives the LP-WUS and subsequent operations performed based on the reception of the LP-WUS to reduce the power consumption of the UE. In other words, to reduce the active state time of the MR, the reception of the LP-WUS and the corresponding UE operations, configurations, and indications are proposed. In addition, the present disclosure proposes: methods of reducing power consumption by decreasing the frequency and duration with which the UE transitions the MR to the active state to perform PDCCH monitoring (or CSI reporting and/or SRS transmission); and methods of reducing unnecessary power consumption by allowing the UE to maintain the MR in the power-off (or sleep) state for a longer duration. The UE may receive the LP-WUS through the LP-WUR, and based on the LP-WUS, the UE may adjust the frequency of PDCCH monitoring on the MR or the CSI reporting and/or SRS transmission on the MR.

Tables 6 and 7 below are excerpted from TR38.840 to aid in understanding the relative power consumption and transition time of the sleep state of the MR of the UE described in the proposed methods. Specifically, Table 6 provides an example of the UE power consumption model in NR frequency range 1 (FR1). Table 7 provides an example of the UE power consumption during state transitions.

[Table 6]

| Power State | Characteristics | Relative Power |
|---|---|---|
| Deep Sleep | Time interval for the sleep should be larger than the total transition time entering and leaving this state. Accurate timing may not be maintained. | 1 (Optional: 0.5) |
| Light Sleep | Time interval for the sleep should be larger than the total transition time entering and leaving this state. | 20 |
| Micro sleep | Immediate transition is assumed for power saving study purpose from or to a non-sleep state | 45 |
| PDCCH-only | No PDSCH and same-slot scheduling; this includes time for PDCCH decoding and any micro-sleep within the slot. | 100 |
| SSB or CSI-RS proc. | SSB can be used for fine time-frequency sync. and RSRP measurement of the serving/camping cell. TRS is the considered CSI-RS for sync. FFS the power scaling for processing other configurations of CSI-RS. | 100 |
| PDCCH + PDSCH | PDCCH + PDSCH. ACK/NACK in long PUCCH is modeled by UL power state. | 300 |
| UL | Long PUCCH or PUSCH. | 250 (0 dBm) 700 (23 dBm) |

[Table 7]

| Sleep type | Additional transition energy: (Relative power x ms) | Total transition time |
|---|---|---|
| Deep sleep | 450 | 20 ms |
| Light sleep | 100 | 6 ms |
| Micro sleep | 0 | 0 ms* |
| * Immediate transition is assumed for power saving study purpose from or to a non-sleep state | | |

However, since Tables 6 and 7 are examples defined/investigated during the standardization discussions on power saving, the actual sleep state operation of the UE may not necessarily match the examples. In addition, descriptions such as the sleep state of the UE may refer to the sleep state of the MR of the UE. Hereinafter, explanations are provided focusing on DRX in NR for ease of understanding, but the proposed methods are not limited to NR systems or DRX. The proposed methods may also be applied to all signals that the UE receives with a certain periodicity. DRX is not limited to NR DRX and may refer to DRX newly proposed in the present disclosure. In the following, a state in which the MR does not receive signals may refer to either an MR power-off state or an MR sleep state depending on the context, or the state may encompass both.

In the following description, the distinction between methods or options is intended to clarify the explanation, and each method or option should not be construed as being limited to independent implementation. For example, the methods/options described below may be implemented individually, but at least some of the methods/options may also be implemented in combination to the extent that the methods/options do not conflict with each other.

### [Proposal 1] LP-WUS reception and related operations of UE configured with DRX

To reduce PDCCH monitoring time on the MR, DRX may be configured for the UE such that the PDCCH monitoring is performed at a certain periodicity. The DRX configuration may include a WUS and may also include a configuration regarding whether CSI reporting and/or SRS transmission is performed when the DRX active time of one cycle is skipped.

Hereinafter, operations of indicating PDCCH monitoring related to the DRX active time to the UE through the LP-WUS are proposed.

### [Proposal 1-1] Indication for transition to UE sleep state during DRX active time through LP-WUS

Proposal 1-1 may be applied to an operation in which the UE transitions the MR to the sleep state based on reception of the LP-WUS on the LR while both the MR and LR are turned on, but Proposal 1-1 is not limited thereto.

The UE starts the drx-onDurationTimer at each configured DRX cycle. The MR may be woken up in accordance with the DRX cycle, and this may be the result of a wake-up indication based on reception of DCI format 2_6.

The UE may start the drx-onDurationTimer in the micro-sleep state. As shown in Tables 6 and 7, the micro-sleep state consumes less power than the state in which the UE monitors the PDCCH (i.e., the active state), but has a transition time of 0 ms. Therefore, the UE may receive the LP-WUS and perform PDCCH monitoring immediately without delay according to the indication of the LP-WUS. The operation of immediately performing the PDCCH monitoring without delay according to the indication of the LP-WUS may also be similarly applied when the UE starts the drx-onDurationTimer in the light sleep state.

The above operation may be similar to receiving an indication such as PDCCH monitoring adaptation (e.g., PDCCH skipping) through the LP-WUS. However, unlike a conventional PDCCH monitoring adaptation indication, there is a difference in that the UE may receive the LP-WUS using the LR even in the micro-sleep state where the MR does not perform the PDCCH monitoring and transition to the active state.

While performing the PDCCH monitoring in the active state, the UE may be instructed to transition to the micro-sleep state through reception of the LP-WUS. This may be an indication to transition to the micro-sleep state through the LP-WUS, which is relatively simple and consumes less power upon reception, without receiving and decoding scheduling DCI.

Such a transition operation may last for a fixed duration (e.g., several slots or several milliseconds) or may continue until the next LP-WUS is received. The operation that lasts for a fixed duration may be similar in form to the PDCCH skipping duration in conventional PDCCH monitoring adaptation. The operation that continues until the next LP-WUS is received may have a form in which the micro-sleep state and active state of the MR are toggled through the transition indication through the LP-WUS.

Information for distinguishing whether the LP-WUS-based indication is an indication to transition to the active state or to the sleep state may be included in the payload of the LP-WUS. This is an example of distinction based on an explicit indication. Alternatively, the operation performed by the UE upon receiving the LP-WUS through sequence detection may vary depending on the current state. This is an example of distinction based on an implicit indication.

The UE may start the drx-onDurationTimer to monitor a PDCCH in the active state and may be configured to receive an instruction to transition to the micro-sleep state through the LP-WUS. The UE state at the start of the drx-onDurationTimer may be configured and indicated by the higher layer or may be predetermined.

A duration within the DRX active time of the UE during which the PDCCH monitoring should always be performed regardless of LP-WUS reception may be configured (e.g., through RRC or network signaling). This operation may ensure that the UE always monitors the PDCCH during a certain duration of the DRX active time even in a worst-case scenario where the LP-WUS reception is difficult or the UE fails to receive the LP-WUS. For example, regardless of the LP-WUS reception and detection, the UE may be configured (e.g., via RRC) to always perform the PDCCH monitoring during a configured duration in the latter part of the drx-onDurationTimer.

A duration within the DRX active where the UE is allowed to receive indications via the LP-WUS for transitioning between the micro-sleep state and the active state may be configured. Such transition operations may be enabled or disabled by the higher layer. Accordingly, as described above, the PDCCH monitoring may be always performed regardless of the LP-WUS reception in a specific duration, or the PDCCH monitoring may be indicated/configured to be controlled via the LP-WUS only for a specific duration. A duration within the DRX active time during which PDCCH monitoring control is indicated may be preconfigured, and the LP-WUS reception occasions of the UE in the RRC connected mode may be configured in relation to the duration. For example, the LP-WUS reception DRX cycle of the UE may be located only within the duration where the PDCCH monitoring is controlled through the LP-WUS.

If such operations are configured, the UE may be indicated/configured via the higher layer, DCI, MAC CE, etc., with a duration in which the UE always monitors the PDCCH, regardless of whether the drx-onDurationTimer is started in the micro-sleep or active state, the transition operation through the LP-WUS reception and the duration thereof, and/or whether the LP-WUS is received within the DRX active time.

**[Proposal 1-2] Indication and operation for adjusting PDCCH monitoring frequency within DRX active time based on search space set configuration through LP-WUS**

The UE starts the drx-onDurationTimer at each configured DRX cycle. The UE may wake up the MR in accordance with the DRX cycle, and this may be the result of a wake-up indication based on the reception of DCI format 2_6.

The UE may monitor search space sets with a larger monitoring occasion (MO) period when starting the drx-onDurationTimer. In other words, at the beginning of the DRX active time, the frequency of PDCCH monitoring may be configured to be low in order to reduce power consumption. While performing the PDCCH monitoring with low power consumption, the UE may be instructed via the LP-WUS to monitor a greater number of search space sets. The search space sets indicated to be monitored via the LP-WUS may be search space sets with relatively higher PDCCH monitoring frequency and smaller monitoring periods. Accordingly, the UE may perform the PDCCH monitoring with relatively low power consumption. Upon receiving the LP-WUS, the UE may monitor the PDCCH more frequently with relatively higher power consumption based on the indication of the LP-WUS, which provides the advantage of enabling smoother data reception.

The LP-WUS-based PDCCH monitoring frequency adjustment operation may be configured/indicated with a duration defined by a specific timer, which may be reset by a specific signal (e.g., DCI of a specific format or DCI CRC-masked by a specific RNTI). Alternatively, the duration of the corresponding operation may be a semi-persistent value configured by the higher layer or a value associated with the DRX timer.

A duration within the DRX active time of the UE may be configured, where the UE should always perform the PDCCH monitoring for all search space sets or for search space sets with an MO period smaller than a specific value, regardless of LP-WUS reception. This operation may ensure that the UE frequently monitors the PDCCH for data reception rather than power saving during a certain portion of the DRX active time, even in worst-case scenarios where the LP-WUS reception is difficult or the UE fails to receive the LP-WUS.

The UE may start the drx-onDurationTimer by monitoring search space sets with a small MO period, and may be instructed through the LP-WUS to switch to the PDCCH monitoring for power saving.

In the above description, the adjustment of PDCCH monitoring frequency has been described based on a periodicity configuration parameter of the search space set. However, PDCCH monitoring may also be adjusted through other search space set configuration parameters. For example, the monitoring of search space sets with different configurations (e.g., different durations and offsets) may be indicated based on the LP-WUS reception.

In the above description, there is no specific restriction the type of search space set, but the configuration may be applied only to a specific type of search space set. For example, the configuration may be applied to a UE-specific SS set or a specific type of common SS set. Such restrictions on a specific type of search space set may be preconfigured or configured/indicated by the higher layer.

The following may be configured/indicated by the higher layer or indicated through DCI/MAC CE: i) which of the search space sets with a small MO period or a large MO period the UE should monitor when starting the drx-onDurationTimer, ii) the transition operation through LP-WUS reception and the duration thereof, and/or iii) a duration within the DRX active time during which the UE should always monitor all search space sets or monitor search space sets with a small period regardless of LP-WUS reception.

Conventional PDCCH monitoring adaptation had the limitation of being provided only through scheduling DCI. In other words, conventional PDCCH monitoring adaptation was constrained by the requirement to be accompanied by scheduling. However, Since the LP-WUS is not a signal for scheduling and is capable of being received even in the MR sleep state, the LP-WUS has the advantage that PDCCH monitoring control may be performed more smoothly and promptly.

### [Proposal 1-3] PDCCH monitoring adaptation indication through LP-WUS

Proposal 1-1 and Proposal 1-2 may be implemented in the form of a PDCCH monitoring adaptation indication. In other words, Proposal 1-1 may be implemented as PDCCH skipping through the LP-WUS, and Proposal 1-2 may be implemented as search space set group (SSSG) switching through the LP-WUS.

In the case of PDCCH skipping through the LP-WUS, multiple skipping durations may be configured, and one of the skipping durations may be indicated through the LP-WUS. However, if direct/explicit indication information is not included due to limitations such as the amount of information capable of being included in the LP-WUS, the indication may be provided indirectly through LP-WUS detection. In this case, the duration of PDCCH skipping may be until next LP-WUS detection (or for the remaining DRX active time), or the duration of PDCCH skipping may be a predetermined fixed value configured through the higher layer.

For example, if the DRX cycle of the LP-WUS is configured to be frequent and the relative power consumption of the LR is very low, maintaining the indicated skipping duration until the next LP-WUS detection may be advantageous for power saving. In such a case, the UE may toggle the on/off state of the PDCCH monitoring operation within the DRX active time through the LP-WUS detection. Similar to Proposal 1-1, the UE may be instructed/configured via the higher layer, DCI, MAC CE, etc., with a duration in which the UE always monitors the PDCCH, regardless of the PDCCH monitoring operation of the UE at the start of the drx-onDurationTimer, the transition operation through the LP-WUS detection and the duration thereof, and/or whether the LP-WUS is received within the DRX active time,

In the case of SSSG switching through the LP-WUS, multiple switching timers may be configured, and one of the switching timers may be indicated through the LP-WUS. However, if direct/explicit indication information is not included due to limitations such as the amount of information capable of being included in the LP-WUS, the indication may be provided indirectly through LP-WUS detection. This operation may be similar to toggling based on DCI detection as in SSSG switching in Rel-16. The value of the SSSG switching timer may be unset or may be a predetermined fixed value configured through the higher layer. If the SSSG switching timer is not configured, the current operation may be maintained until the next LP-WUS is detected. If the DRX cycle of the LP-WUS is configured to be frequent and the relative power consumption of the LR is very low, configuring no switching timer may be advantageous for power saving.

The following may be configured/indicated by the higher layer or indicated through DCI/MAC CE: i) which of the search space sets with a small MO period or a large MO period the UE should monitor when starting the drx-onDurationTimer, ii) the transition operation through LP-WUS reception and the duration thereof, and/or iii) a duration within the DRX active time during which the UE should always monitor all search space sets or monitor search space sets with a small period regardless of LP-WUS reception.

### [Proposal 1-41 ACK for LP-WUS

A situation in which the LP-WUS indicates that the UE in a state for power saving needs to transition to a state for data reception may generally occur when the BS has data to schedule for the UE. Thus, the UE may subsequently detect DCI through PDCCH monitoring, receive the scheduled data, and transmit an ACK for the data. Accordingly, the BS may indirectly confirm that the UE has correctly received the indication via the LP-WUS.

If the transmission period of the LP-WUS is long or the miss detection probability of the LP-WUS is high, the UE may fail to detect DCI and not receive the data due to failure in LP-WUS reception. Accordingly, latency may occur until the BS determines that there was a problem with LP-WUS transmission due to the absence of the ACK from the UE.

To prevent such issues, the ACK for the LP-WUS may be configured/used. The UE may perform the transition to the state for data reception upon receiving the LP-WUS and simultaneously transmit the ACK for the LP-WUS. The BS transmits a PDCCH and corresponding scheduled data (PDSCH) to the UE regardless of whether the ACK is received. However, if the BS does not receive the ACK for the LP-WUS within a time during which the ACK for the LP-WUS is expected to be received, the BS may determine that the UE failed to properly receive the LP-WUS. In such a case, the BS may also determine that the previously transmitted PDCCH and PDSCH were not properly received by the UE. By transmitting the LP-WUS, the BS may resume the indication for the UE to transition to the state for data reception.

Alternatively, the BS may be configured to transmit the PDCCH and the corresponding scheduled data only after receiving the ACK for the LP-WUS from the UE.

Alternatively, an operation for preventing the LP-WUS reception failure may be introduced on the UE side. If the UE fails to properly receive the LP-WUS during the LP-WUS DRX cycle, the UE may be configured to transition to the state for data reception. For example, in Proposal 1-1, the UE may transition the MR to the active state to receive the PDCCH, or in Proposal 1-2, the UE may switch to a state for monitoring a search space set with a small MO period. If the UE fails to monitor the PDCCH for a certain period (e.g., slot duration) or after a certain period of time has passed, the UE may be configured to transition back to the state for power saving (e.g., the MR sleep state or a state for monitoring a search space set with a large MO period).

The explicit ACK transmission by the UE for the LP-WUS reception may be in a form similar to transmission of an ACK for general scheduled data (e.g., PDSCH). As in general ACK transmission, the ACK for the LP-WUS may include a simple indication of successful reception of the LP-WUS or information indicating which UE successfully received the LP-WUS in consideration of a group-common LP-WUS.

Alternatively, the UE may indirectly inform the BS of the successful reception of the LP-WUS through specific UL transmission. For example, SRS transmission of the UE may be considered an indirect ACK for the LP-WUS. The configuration of an SRS used for the ACK of the LP-WUS may differ from the configuration of a general SRS. General SRS transmission by the UE is performed within the DRX active time. If the UE is instructed via the LP-WUS to transition from the state for power saving to the state for data reception, the UE may not perform SRS transmission while in the state for power saving. When the UE receives the LP-WUS and transitions to the state for data reception, the UE may transmit an SRS to indirectly indicate successful reception of the LP-WUS. The operation in which the UE transmits no SRS while in the state for power saving may also contribute to reducing the power consumption of the UE.

The SRS transmission after the LP-WUS reception may be triggered by LP-WUS detection, by an indicator within the LP-WUS, or by a separate configuration.

### [Proposal 21 LP-WUS reception outside DRX active time

The operation may be defined for a case where the UE configured with DRX receives the LP-WUS outside the DRX active time. The LP-WUS received by the UE outside the DRX active time may serve the role of a WUS, similar to DCI format 2_6.

The LP-WUS may provide a wake-up indication in a different duration from DCI format 2_6. The DRX configuration of the UE in Rel-15/16/17 has a specific periodicity, and in each DRX cycle, wake-up determination may be based on the wake-up indication of DCI format 2_6. When the BS intends to indicate PDCCH monitoring outside the DRX active time configured for the UE, the LP-WUS may be used. In other words, when the UE is configured with periodic PDCCH monitoring through DRX, and the BS intends to quickly transmit data to the UE, the BS may indicate immediate PDCCH monitoring through the LP-WUS without waiting for the next DRX cycle. The longer the DRX cycle configured for the UE, the greater the power-saving effect may be expected. For example, if DRX with a large cycle (e.g., eDRX) is configured for the UE, the UE may maintain the sleep state for most of the time to reduce power consumption. When low-latency transmission is required, the UE may trigger the MR to wake up through LP-WUS reception to receive the PDCCH.

The PDCCH monitoring period initiated by the LP-WUS reception may be based on a timer (e.g., existing DRX timer), and the timer may be updated/reset upon DCI detection. Alternatively, the timer may be configured to be shorter than the existing DRX timer. As another method, a fixed-length window may be preconfigured/indicated through the higher layer. The UE may perform the PDCCH monitoring only within the window, receive corresponding data, and perform reception after the end of the window in the next DRX cycle.

For example, the LP-WUS may replace the conventional WUS of DRX. Similar to the conventional WUS, the LP-WUS DRX cycle may be configured in a time duration preceding the DRX cycle, by considering the preparation time required for the MR of the UE to perform the PDCCH monitoring.

### [Proposal 3] Dynamic triggering of DRX based on LP-WUS reception

The DRX of the UE may be dynamically triggered by LP-WUS reception instead of operating with a fixed cycle. The LR of the UE may always operate independently of the MR, which allows the UE to always receive the LP-WUS (although it may depend on the configured LP-WUS DRX cycle). Since the MR sleep time has a significant impact on reducing the power consumption of the UE, the UE in the RRC connected mode may keep the MR in the sleep state for as long as possible and trigger the MR to wake up through the LP-WUS only when there is data to be transmitted. To this end, the MR may be configured to always remain in the sleep state (e.g., a state in which PDCCH monitoring and/or data transmission and reception are not performed), and the MR may operate such that the MR transitions to the active state only upon receiving a wake-up indication through the LP-WUS (for a predetermined duration).

Maintaining the MR always in the sleep state may be implemented in various ways. For example, in an existing DRX configuration, drx-onDurationTimer=0 may be configured. Alternatively, the default state of the UE may be set to the sleep state, without configuring DRX for the UE. In this case, the sleep state of the UE may be set to one of the states in Table 7 depending on the latency requirements or the power consumption requirements of the UE.

The UE maintains the MR in the sleep state and receives the LP-WUS through the LR. In this case, the sleep state of the MR may be configured based on latency and idle power consumption (which have a trade-off relationship with the sleep state of the MR). The UE receives the LP-WUS and triggers the MR to wake up accordingly. Depending on the sleep state of the MR, the time required for the UE to transition to a state capable of monitoring the PDCCH after waking up may be determined. For example, if the UE was in the micro-sleep state, the time required for the UE to monitor the PDCCH through the MR after the LP-WUS reception may be considered to be close to 0 ms. After transmitting the LP-WUS, the BS may transmit the PDCCH by considering the state transition time of the MR.

If the UE wakes up the MR, the UE may perform general DRX operations or monitor the PDCCH over a fixed-length window as in Proposal 2. Afterwards, while monitoring the PDCCH, the UE may continue to receive the LP-WUS through the LR. That is, the UE may operate as described in Proposal 1. In other words, the UE may receive indications such as transitioning to the micro-sleep state transitions within the DRX active time, adjustment of PDCCH monitoring frequency based on a search space set configuration, and PDCCH monitoring adaptation via the LP-WUS.

As described above, in the case of Proposal 3, the UE may keep the MR in the sleep state for a longer duration to improve power-saving effects. If the UE does not wake up in each DRX cycle and the BS dynamically provides indications through the LP-WUS, the sleep time of the UE may be flexible.

To replace the Rel-16 WUS with the LP-WUS, the LP-WUS may also support an SCell dormancy indication, which is another function of the existing Rel-16 WUS. In other words, information on the SCell dormancy indication may be included in the LP-WUS capable of being received by the UE in the RRC connected mode. Alternatively, scheduling DCI transmitted after the start of PDCCH monitoring may provide the SCell dormancy indication.

Hereinafter, the differences between Proposal 3 and the Rel-16 standard WUS-based DRX operation will be described in detail.

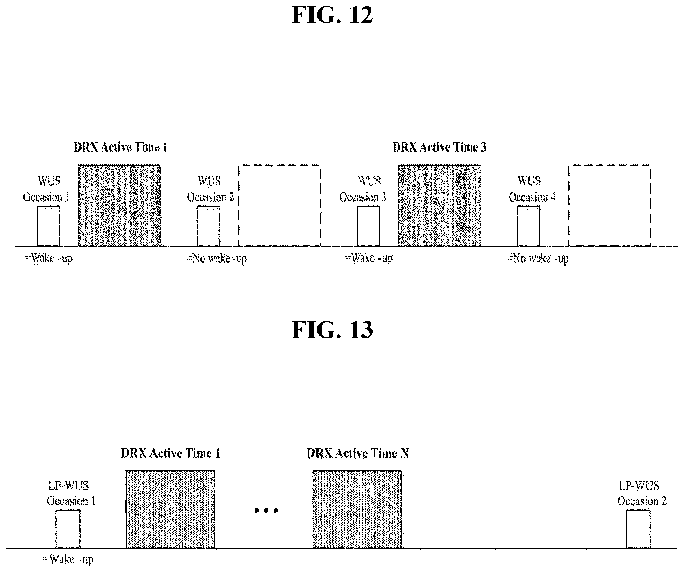

First, with reference to FIG. 12, the WUS-based DRX operation of the UE defined in the Rel-16 standard is described.

The UE receives configuration information such as a DRX cycle, a timer (drx-onDurationTimer) started at the beginning of the active time, etc. through network signaling. For each DRX cycle, an MO for a WUS (e.g., DCI format 2_6 with a CRC scrambled by a ps-RNTI) is also configured for the UE. Through a higher layer parameter ps_Offset, a monitoring window in which DCI 2_6 is capable of being monitored and related search space set(s) are configured for the UE.

The UE receives DCI format 2_6 before the expected time of the DRX active time. Based on the indication of DCI format 2_6, the UE may determine whether to wake up during the DRX active time.

In FIG. 12, for the DRX active time of first and third cycles, associated DCI format 2_6 indicates wake-up and initiates the DRX cycle, while for the DRX active time of second and fourth cycles, associated DCI format 2_6 indicates no wake-up and does not initiate the DRX cycle. In other words, the UE may determine the start of the DRX active time, which is periodically repeated, based on reception of preceding DCI format 2_6.

FIG. 13 is a diagram for explaining an operation of dynamically triggering DRX based on LP-WUS reception according to Proposal 3. In Proposal 3, the timing of the DRX active time expected by the UE may not be configured. In this case, the DRX active time initiated by the UE may be determined only through the LP-WUS reception.

For example, the UE may be configured to always receive the LP-WUS or to receive the LP-WUS based on a certain periodicity. Due to the characteristic of being received with low power, the LP-WUS may have a higher frequency than the WUS DRX cycle of the Rel-16 standard.

The UE may normally keep the MR in the sleep state to minimize power consumption and start the DRX active time only upon receiving the LP-WUS through the LR. When the UE receives the LP-WUS through the LR, the UE may start the DRX active time preconfigured through higher layer parameters.

In summary, in the Rel-16 standard method shown in FIG. 12, the timing at which the UE may expect the start of the DRX active time is (semi-statically) configured through network/RRC signaling. In contrast, in the example of Proposal 3 shown in FIG. 13, the timing at which the UE may expect the start of the DRX active time is not (semi-statically) configured. Therefore, in FIG. 13, since the UE may start the DRX active time only through the LP-WUS reception, the LP-WUS reception may be understood as the dynamic triggering of DRX (or PDCCH monitoring). By receiving the LP-WUS, the UE may start preconfigured N DRX active times (where N is an integer equal to or greater than 1). After the N DRX active times, the UE may again keep the MR in the sleep state and monitor only the LP-WUS to reduce power consumption.

## [Proposal 4] CSI reporting and/or SRS transmission based on LP-WUS reception

The CSI reporting and/or SRS transmission of the UE configured with DRX may be configured to be performed only within the DRX active time. In other words, it may be interpreted that the CSI reporting and/or SRS transmission are performed only in a duration during which the UE monitors the PDCCH. Accordingly, similar to indicating whether to perform PDCCH monitoring through LP-WUS reception, it may be considered to provide an indication regarding whether to perform the CSI reporting and/or SRS transmission.

The UE may receive the indication for the CSI reporting and/or SRS transmission through the LP-WUS reception. Since the CSI reporting/SRS transmission is not an operation performed by the UE in the idle/inactive mode, information in the LP-WUS (related to the CSI reporting/SRS transmission) received by the UE in the Connected mode may differ from information in the LP-WUS received by the UE in the idle/inactive mode. The UE in the connected mode may receive an indication to start or stop the CSI reporting/SRS transmission via the LP-WUS.

Alternatively, even if the LP-WUS does not include information related to the corresponding indication, the UE may start or stop the CSI reporting/SRS transmission based on LP-WUS detection without separate indications. In this case, the CSI reporting/SRS transmission of the UE may depend on the MR sleep state. For example, if the UE transitions the MR to the sleep state upon receiving the LP-WUS, the UE may stop performing the CSI reporting and/or SRS transmission (even without separate indications). Some or all of the CSI reporting and/or SRS transmission may be stopped through subsequent LP-WUS reception or may be performed for a certain period, regardless of the micro-sleep state of the MR.

The UE monitoring the LP-WUS may not perform some of the CSI reporting/SRS transmission. For example, some CSI reporting/SRS transmission essential for maintaining channel quality may always be performed, and other CSI reporting/SRS transmission may be additionally performed based on the indication received through the LP-WUS reception.

In Proposal 1, the CSI reporting/SRS transmission may be indirectly indicated through the LP-WUS reception regarding whether the MR needs to perform the PDCCH monitoring.

In Proposal 2, if the DRX cycle is started at a non-periodic location through the LP-WUS reception, the UE may perform the CSI reporting and/or SRS transmission according to the relevant configuration. In other words, if the CSI reporting and/or SRS transmission is configured within the DRX active time, the UE may follow the configuration, and the CSI reporting and/or SRS transmission may also be triggered by the LP-WUS indication.

In Proposal 3, when the DRX active time starts, the CSI reporting and/or SRS transmission may be performed, but the period thereof may become very long, which may lead to issues in the channel quality. Therefore, i) DRX may be triggered through the LP-WUS at a certain periodicity such that the CSI reporting and/or SRS transmission are performed together with the PDCCH monitoring, ii) the CSI reporting and/or SRS transmission may be configured to be performed at a certain periodicity regardless of the PDCCH monitoring, or iii) the CSI reporting and/or SRS transmission may be performed based on a separate LP-WUS indication.

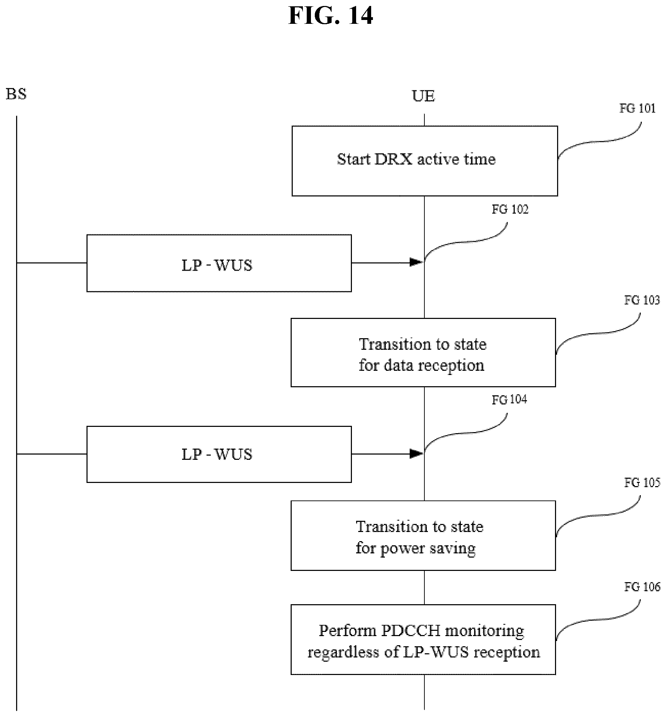

FIG. 14 illustrates an example of BS and UE operations based on Proposal 1. Specifically, FIG. 14 shows that the UE starts the DRX active time and transitions between a state for data reception and a state for power saving through LP-WUS reception.

The UE starts a DRX active time according to a configuration (FG101). The UE may start DRX at a predetermined periodicity or may receive an indication regarding whether to start DRX through a WUS. The UE may start DRX in a state for power saving (e.g., a micro-sleep state or a state for monitoring a search space set with a large MO period). Alternatively, the UE may monitor a PDCCH in the same manner as in the current standard operation.

The UE receives an LP-WUS through the LR (FG102). The LP-WUS may include indications applicable to the connected mode UE, or may indirectly indicate an operation simply by being detected without any specific indications.

The UE may transition to the state for data reception (FG103). This is an operation related to the MR of the UE. The UE may transition to a non-sleep state for monitoring the PDCCH or monitor search space sets with a small MO period.

The UE receives an LP-WUS through the LR (FG104). Similar to the previously received LP-WUS, the LP-WUS may include indications applicable to the connected mode UE, or may indirectly indicate an operation simply by being detected without any specific indications. Alternatively, the reception of the corresponding LP-WUS may be omitted, and the UE may perform subsequent operations after a certain period of time.

The UE may transition to a state for power saving (FG105). This is an operation related to the MR of the UE. The MR may transition to a sleep state where PDCCH monitoring is not performed or monitor search space sets with a large MO period. The UE monitors the PDCCH for a certain period before the end of the DRX active time regardless of LP-WUS reception. This operation may be indicated/configured for the UE, or if not configured, the UE may not perform the operation.

In Proposal 1-3, the indication through the LP-WUS may be related to FG103 and FG105.

In Proposal 1-4, the direct or indirect ACK transmission for the LP-WUS may be performed between the LP-WUS reception by the UE (FG102 and FG104) and the operations performed according to the indication (FG103 and FG105).

The UE performs RRM measurement using the LR according to the requirements (FG101). The signal used by the UE to perform the RRM measurement with the LR may be an LP-RS.

The UE may determine whether to trigger the MR to wake up based on the result of the RRM measurement (FG102). The RRM measurement result based on the LR (Srxlev_LP) may be compared with a threshold (S_th) that determines whether to trigger the MR.

If the RRM measurement result based on the LR is greater than or equal to the threshold, the UE does not wake up the MR (FG103). In other words, this may indicate that the UE does not need to perform the RRM measurement based on the MR for the corresponding DRX cycle.

If the RRM measurement result based on the LR is less than or equal to the threshold, the UE wakes up the MR (FG104). In this case, the RRM measurement based on the MR may be quality measurement for the serving cell or measurement for neighbor cells.

As described above, the UE may use the LP-WUS to reduce the frequency of PDCCH monitoring performed by the MR, thereby significantly reducing power consumption. Additionally, the UE may reduce the power consumption thereof by adjusting CSI reporting and/or SRS transmission based on indications via the LP-WUS.

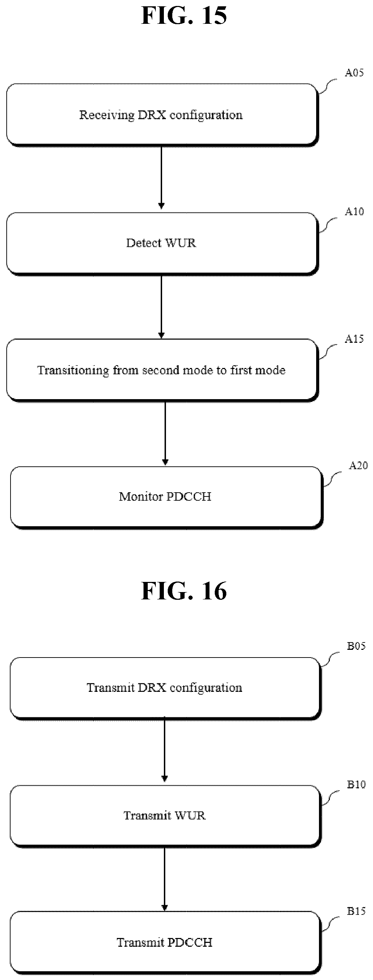

FIG. 15 illustrates a flow of a method by which a UE receives signals in a wireless communication system according to an embodiment.

Referring to FIG. 15, the UE may receive a DRX configuration in a first mode that supports both a first type of signal and a second type of signal (A05).

The UE may detect a WUS provided as the second type of signal in a second mode that supports only the second type of signal (A10).

Based on the detection of the WUS, the UE may transition from the second mode to the first mode to monitor a PDCCH provided as the first type of signal (A15).

The UE may monitor the PDCCH in the first mode based on the DRX configuration (A20).

A time resource related to the DRX configuration may be determined based on a detection time point of the WUS in the second mode.

A start time point of at least one DRX active time related to the DRX configuration may be determined based on the detection time point of the WUS in the second mode.

The UE may monitor the PDCCH during N DRX active times that start based on the detection time point of the WUS.

The UE may return to the second mode after monitoring the PDCCH during the N DRX active times.

How frequently the monitoring of the PDCCH is performed, may be determined based on the WUS.

Whether to perform at least one of CSI reporting and SRS transmission during at least one DRX active time related to the DRX configuration may be determined based on the WUS.

An ACK for the WUS may be transmitted in the first mode.

The first type of signal may be an OFDM based signal, and the second type of signal may be a non-OFDM based signal.

The first type of signal may be a signal received at an MR, the second type of signal may be a signal received at an LR, and the WUS may be an LP-WUS.

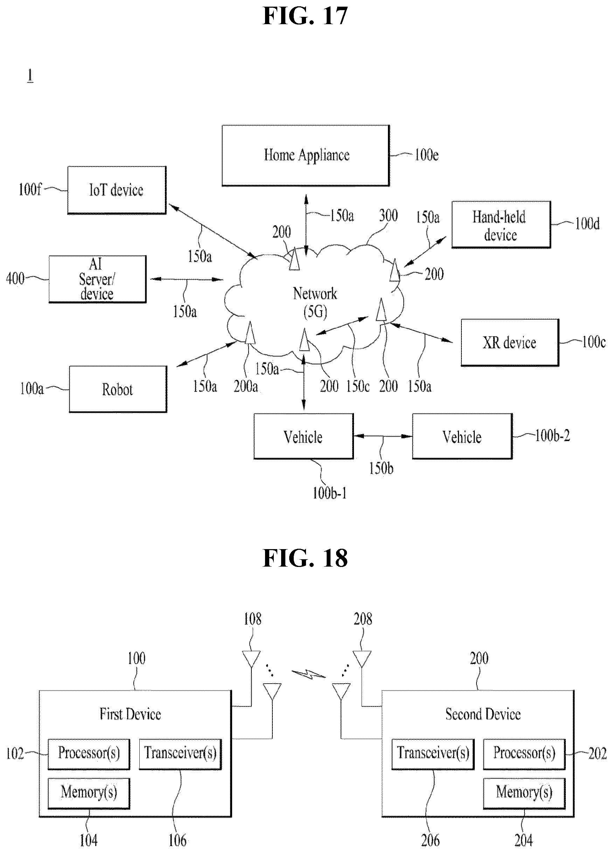

The transmitter/receiver of the BS/UE (e.g., transceivers 106 and 206 of FIG. 18) may include an MR transmitter/receiver configured to transmit/receive the first type of signal and an LP-WUR transmitter/receiver configured to transmit/receive the second type of signal.

FIG. 16 illustrates a flow of a method by which a BS transmits signals in a wireless communication system according to an embodiment.

Referring to FIG. 16, the BS transmits a DRX configuration to a UE operating in a first mode that supports both a first type of signal and a second type of signal (B05).

Based on that the UE operates in a second mode that supports only the second type of signal, the BS may transmit a WUS provided as the second type of signal (B10).

Based on the transmission of the WUS, the BS may transmit a PDCCH provided as the first type of signal to the UE that transitions from the second mode to the first mode, according to the DRX configuration (B15).

A time resource related to the DRX configuration may be determined based on a transmission time point of the WUS in the second mode.

A start time point of at least one DRX active time related to the DRX configuration may be determined based on the transmission time point of the WUS in the second mode.

The BS may transmit the PDCCH during N DRX active times that start based on the transmission time point of the WUS.

After the BS transmits the PDCCH during the N DRX active times, the UE may return to the second mode.

The frequency at which the PDCCH monitoring is performed may be determined based on the WUS.

Whether to receive at least one of a CSI report and an SRS is during at least one DRX active time related to the DRX configuration may be determined based on the WUS.

An ACK for the WUS may be received in the first mode.

The first type of signal may be an OFDM based signal, and the second type of signal may be a non-OFDM based signal.

The first type of signal may be a signal transmitted from an MR, the second type of signal may be a signal transmitted from an LR, and the WUS may be an LP-WUS.

The transmitter/receiver of the BS/UE (e.g., transceivers 106 and 206 of FIG. 18) may include an MR transmitter/receiver configured to transmit/receive the first type of signal and an LP-WUR transmitter/receiver configured to transmit/receive the second type of signal.

FIG. 17 illustrates a communication system 1 applied to the present disclosure.

Referring to FIG. 17, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 18 illustrates wireless devices applicable to the present disclosure.

Referring to FIG. 18, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 17.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In an embodiment of the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In an embodiment of the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

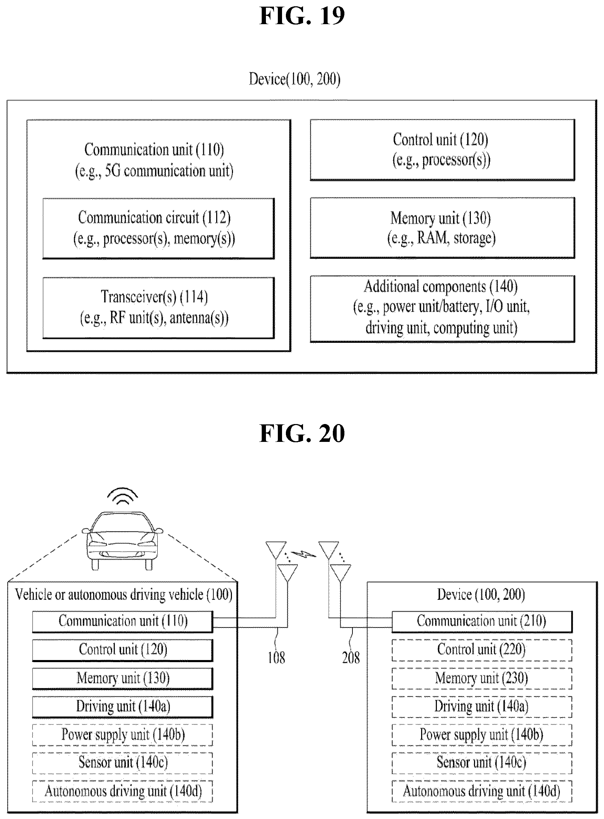

FIG. 19 illustrates another example of a wireless device applied to the present disclosure. The wireless device may be implemented in various forms according to a use-case/service (refer to FIG. 17).

Referring to FIG. 19, wireless devices 100 and 200 may correspond to the wireless devices 100 and 200 of FIG. 18 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 18. For example, the transceiver(s) 114 may include the one or more transceivers 106 and 206 and/or the one or more antennas 108 and 208 of FIG. 18. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 17), the vehicles (100b-1 and 100b-2 of FIG. 17), the XR device (100c of FIG. 17), the hand-held device (100d of FIG. 17), the home appliance (100e of FIG. 17), the IoT device (100f of FIG. 17), a digital broadcast terminal, a hologram device, a public safety device, an MTC device, a medicine device, a fintech device (or a finance device), a security device, a climate/environment device, the AI server/device (400 of FIG. 17), the BSs (200 of FIG. 17), a network node, etc. The wireless device may be used in a mobile or fixed place according to a use-example/service.

In FIG. 19, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 20 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 20, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 19, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

The above-described embodiments correspond to combinations of elements and features of the present disclosure in prescribed forms. And, the respective elements or features may be considered as selective unless they are explicitly mentioned. Each of the elements or features may be implemented in a form failing to be combined with other elements or features. Moreover, it is able to implement an embodiment of the present disclosure by combining elements and/or features together in part. A sequence of operations explained for each embodiment of the present disclosure may be modified. Some configurations or features of an embodiment may be included in another embodiment or may be substituted for corresponding configurations or features of another embodiment. And, an embodiment may be configured by combining claims failing to have relation of explicit citation in the appended claims together or may be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

## INDUSTRIAL APPLICABILITY

The present disclosure is applicable to UEs, BSs, or other apparatuses in a wireless mobile communication system.

## Claims

1.    A method of receiving a signal by a user equipment (UE) in a wireless communication system, the method comprising:

receiving a discontinuous reception (DRX) configuration in a first mode that supports both a first type of signal and a second type of signal;
detecting a wake-up signal (WUS) provided as the second type of signal in a second mode that supports only the second type of signal;
based on the detection of the WUS, transitioning from the second mode to the first mode to monitor a physical downlink control channel (PDCCH) provided as the first type of signal; and
monitoring the PDCCH in the first mode based on the DRX configuration,
wherein a time resource related to the DRX configuration is determined based on a detection time point of the WUS in the second mode.

2.    The method of claim 1, wherein a start time point of at least one DRX active time related to the DRX configuration is determined based on the detection time point of the WUS in the second mode.

3.    The method of claim 1, wherein the UE monitors the PDCCH during N DRX active times that start based on the detection time point of the WUS.

4.    The method of claim 3, wherein the UE returns to the second mode after monitoring the PDCCH during the N DRX active times.

5. The method of claim 1, wherein how frequently the monitoring of the PDCCH is performed, is determined based on the WUS.

6. The method of claim 1, wherein whether to perform at least one of channel state information (CSI) reporting and sounding reference signal (SRS) transmission during at least one DRX active time related to the DRX configuration is determined based on the WUS.

7. The method of claim 1, wherein an acknowledgement (ACK) for the WUS is transmitted in the first mode.

8. The method of claim 1, wherein the first type of signal is a signal based on orthogonal frequency division multiplexing (OFDM), and
wherein the second type of signal is a signal based on non-OFDM.

9. A computer-readable recording medium having recorded thereon a program for executing the method of claim 1.

10. A device for wireless communication, the device comprising:

a memory configured to store instructions; and
a processor configured to perform operations by executing the instructions,
wherein the operations of the processor comprise:

receiving a discontinuous reception (DRX) configuration in a first mode that supports both a first type of signal and a second type of signal;
detecting a wake-up signal (WUS) provided as the second type of signal in a second mode that supports only the second type of signal;
based on the detection of the WUS, transitioning from the second mode to the first mode to monitor a physical downlink control channel (PDCCH) provided as the first type of signal; and
monitoring the PDCCH in the first mode based on the DRX configuration,
wherein a time resource related to the DRX configuration is determined based on a detection time point of the WUS in the second mode.

11. The device of claim 10, further comprising:

a main radio (MR) receiver configured to receive the first type of signal; and
a low-power wake-up radio (LP-WUR) receiver configured to receive the second type of signal.

12. The device of claim 10, wherein the device is a user equipment (UE) operating in a wireless communication system or a processing device configured to control the UE.

13. A method of transmitting a signal by a base station (BS) in a wireless communication system, the method comprising:

transmitting a discontinuous reception (DRX) configuration to a user equipment (UE) operating in a first mode that supports both a first type of signal and a second type of signal;
based on that the UE operates in a second mode that supports only the second type of signal, transmitting a wake-up signal (WUS) provided as the second type of signal; and
based on the transmission of the WUS, transmitting a physical downlink control channel (PDCCH) provided as the first type of signal to the UE that transitions from the second mode to the first mode, according to the DRX configuration,
wherein a time resource related to the DRX configuration is determined based on a transmission time point of the WUS in the second mode.

14. A base station (BS) for wireless communication, the BS comprising:

a memory configured to store instructions; and
a processor configured to perform operations by executing the instructions,
wherein the operations of the processor comprise:

transmitting a discontinuous reception (DRX) configuration to a user equipment (UE) operating in a first mode that supports both a first type of signal and a second type of signal;

based on that the UE operates in a second mode that supports only the second type of signal, transmitting a wake-up signal (WUS) provided as the second type of signal; and

based on the transmission of the WUS, transmitting a physical downlink control channel (PDCCH) provided as the first type of signal to the UE that transitions from the second mode to the first mode, according to the DRX configuration,

wherein a time resource related to the DRX configuration is determined based on a transmission time point of the WUS in the second mode.

# FIG. 1

| Initial Cell Search | System Information Reception | Random Access Procedure | General DL/UL Tx/Rx S108 |
|---|---|---|---|

PSS/SSS & [DLRS] & PBCH

PDCCH/ PDSCH (BCCH)

PRACH

PDCCH/ PDSCH

PRACH

PDCCH/ PDSCH

PDCCH/ PDSCH

PUSCH/ PUCCH

S101    S102    S103    S104    S105    S106    S107

• DL/UL ACK/NACK
• UE CQI/PMI/Rank Report using PUSCH and PUCCH

# FIG. 2

| One Frame (10ms) |
|---|

| Half-Frame (5ms) | Half-Frame (5ms) |
|---|---|

| Subframe 0 (1ms) | Subframe 4 (1ms) | Subframe 5 (1ms) | Subframe 9 (1ms) |
|---|---|---|---|

Subframe (1ms)

15KHz | Slot (14 symbols)

1ms

30KHz | Slot 0 (14 symbols) | Slot 1

500us

60KHz | Slot 0 (14 symbols) | Slot 1 | Slot 2 | Slot 3

250us

120KHz | Slot 0 (14 symbols) | Slot 1 | Slot 2 | Slot 3 | Slot 4 | Slot 5 | Slot 6 | Slot 7

125us

# FIG. 3

Resource grid

A carrier
(up to 3300 subcarriers, i. e., 275 RBs)

A BWP

1 RB = 12 subcarriers

1 RE

1 subcarrier

1 symbol

# FIG. 4

Long PUSCH

PDCCH

Gap

PDSCH/PUSCH

Short PUCCH

Long PUSCH

One slot

f

t

# FIG. 5

| UE | | BS |

CORESET configuration — S502

SS configuration — S504

PDCCH generation — S506

PDCCH candidate monitoring in the configured SS — S508

# FIG. 6

DL assingment-to-PDSCH offset (K0)

PDCCH  PDSCH  PUCCH

slot

PDSCH-to-HARQ-ACK reporting offset (K1)

# FIG. 7

UL grant-to-PUSCH offset (K2)

PDCCH  PUSCH

# FIG. 8

UE shall monitor PDCCH

On Duration — Opportunity for DRX

DRX Cycle

# FIG. 9

# FIG. 10

# FIG. 11

# FIG. 12

DRX Active Time 1
DRX Active Time 3

WUS
Occasion 1

WUS
Occasion 2

WUS
Occasion 3

WUS
Occasion 4

=Wake-up
=No wake-up
=Wake-up
=No wake-up

# FIG. 13

DRX Active Time 1
DRX Active Time N

LP-WUS
Occasion 1

• • •

LP-WUS
Occasion 2

=Wake-up

# FIG. 14

BS                                              UE                          FG 101

Start DRX active time

FG 102

LP - WUS

FG 103

Transition to state
for data reception

FG 104

LP - WUS

FG 105

Transition to state
for power saving

FG 106

Perform PDCCH monitoring
regardless of LP-WUS reception

# FIG. 15

Receiving DRX configuration — A05

Detect WUR — A10

Transitioning from second mode to first mode — A15

Monitor PDCCH — A20

# FIG. 16

Transmit DRX configuration — B05

Transmit WUR — B10

Transmit PDCCH — B15

# FIG. 17

# FIG. 18

# FIG. 19

Device(100, 200)

| Communication unit (110) (e.g., 5G communication unit) | Control unit (120) (e.g., processor(s)) |
|---|---|
| Communication circuit (112) (e.g., processor(s), memory(s)) | Memory unit (130) (e.g., RAM, storage) |
| Transceiver(s) (114) (e.g., RF unit(s), antenna(s)) | Additional components (140) (e.g., power unit/battery, I/O unit, driving unit, computing unit) |

# FIG. 20

Vehicle or autonomous driving vehicle (100)
Communication unit (110)
Control unit (120)
Memory unit (130)
Driving unit (140a)
Power supply unit (140b)
Sensor unit (140c)
Autonomous driving unit (140d)

108    208

Device (100, 200)
Communication unit (210)
Control unit (220)
Memory unit (230)
Driving unit (140a)
Power supply unit (140b)
Sensor unit (140c)
Autonomous driving unit (140d)

## INTERNATIONAL SEARCH REPORT

| International application No. |
|---|
| **PCT/KR2024/095310** |

| A. | CLASSIFICATION OF SUBJECT MATTER |
|---|---|
| | **H04W 52/02**(2009.01)i; **H04W 76/28**(2018.01)i; **H04W 72/232**(2023.01)i; **H04W 72/21**(2023.01)i |

According to International Patent Classification (IPC) or to both national classification and IPC

| B. | FIELDS SEARCHED |
|---|---|

Minimum documentation searched (classification system followed by classification symbols)

H04W 52/02(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: DRX(discontinuous reception), MR(main radio) 수신기(receiver), 저전력(low power), WUS(wake-up signal), PDCCH(physical downlink control channel), 모니터링(monitoring), 활성시간(active time)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2020-0003173 A (CONVIDA WIRELESS, LLC) 08 January 2020 (2020-01-08)<br>See paragraphs [0012], [0051]-[0052], [0060]-[0063], [0133] and [0135]; claim 1; and figures 4 and 6. | 1-14 |
| Y | QUALCOMM INCORPORATED. Evaluation methodology for LP-WUS. R1-2210010, 3GPP TSG RAN WG1 Meeting #110bis-e, e-Meeting. 30 September 2022.<br>See section 4.4, table 4. | 1-14 |
| Y | INTEL CORPORATION. Discussion on evaluations on LP WUS. R1-2211420, 3GPP TSG RAN WG1 Meeting #111. Toulouse, France. 07 November 2022.<br>See section 3.3. | 5 |
| A | WO 2022-266036 A1 (IDAC HOLDINGS, INC.) 22 December 2022 (2022-12-22)<br>See paragraphs [0154]-[0231]; and figures 9-19. | 1-14 |
| A | KR 10-2386723 B1 (SONY GROUP CORPORATION) 14 April 2022 (2022-04-14)<br>See paragraphs [0097]-[0157]; and figures 9a-16. | 1-14 |

☐ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 May 2024** | **30 May 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/095310**

| Patent document cited in search report | | | Publication date (day/month/year) | Patent family member(s) | | | Publication date (day/month/year) |
|---|---|---|---|---|---|---|---|
| KR | 10-2020-0003173 | A | 08 January 2020 | CN | 110754117 | A | 04 February 2020 |
| | | | | EP | 3619972 | A1 | 11 March 2020 |
| | | | | JP | 2020-519196 | A | 25 June 2020 |
| | | | | US | 2020-0145921 | A1 | 07 May 2020 |
| | | | | WO | 2018-204799 | A1 | 08 November 2018 |
| WO | 2022-266036 | A1 | 22 December 2022 | EP | 4356655 | A1 | 24 April 2024 |
| | | | | KR | 10-2024-0032842 | A | 12 March 2024 |
| KR | 10-2386723 | B1 | 14 April 2022 | CN | 110741689 | A | 31 January 2020 |
| | | | | CN | 110945917 | A | 31 March 2020 |
| | | | | EP | 3603218 | A1 | 05 February 2020 |
| | | | | EP | 3603219 | A1 | 05 February 2020 |
| | | | | KR | 10-2019-0127799 | A | 13 November 2019 |
| | | | | US | 2020-0022081 | A1 | 16 January 2020 |
| | | | | US | 2020-0022082 | A1 | 16 January 2020 |
| | | | | WO | 2018-172347 | A1 | 27 September 2018 |
| | | | | WO | 2018-172375 | A1 | 27 September 2018 |

Form PCT/ISA/210 (patent family annex) (July 2022)